# EUROPEAN PATENT SPECIFICATION

(11) **EP 4 105 753 B1**
(45) Date of publication and mention of the grant of the patent: **08.10.2025**
(21) Application number: 20918913.3
(22) Date of filing: 25.12.2020
(51) Int. Cl.: G05D 1/227, G05D 1/244, G05D 1/646, G05D 1/81, G05D 105/22, G05D 107/20, G05D 109/10, G05D 111/30

(54) **VEHICLE AND MOBILE TERMINAL UTILIZED THEREFOR**
FAHRZEUG UND MOBILES ENDGERÄT DAFÜR
VÉHICULE ET TERMINAL MOBILE UTILISÉ À CET EFFET

(30) Priority: 12.02.2020 JP 2020021836
(43) Date of publication of application: 21.12.2022
(73) Proprietor: YAMAHA HATSUDOKI KABUSHIKI KAISHA, Iwata-shi, Shizuoka 438-8501 (JP)
(72) Inventor: ARIMUNE Nobuyasu, Kakegawa-shi, Shizuoka 436-0084 (JP)
(74) Representative: Stöckeler, Ferdinand
(86) International application number: PCT/JP2020/048761
(87) International publication number: WO 2021/161678

(56) References cited:
- WO-A1-2019/220319
- JP-A- 2005 339 181
- JP-A- 2017 123 829
- US-A1- 2018 154 899
- US-A1- 2018 164 825
- US-A1- 2020 041 995
- US-B1- 8 321 067

## Description

### TECHNICAL FIELD

The present invention relates to vehicles and mobile terminals utilized therefor, and more specifically to a vehicle such as a golf cart and a mobile terminal utilized therefor.

### BACKGROUND ART

Patent Literature 1 discloses an example which is pertinent to conventional techniques of this kind. Patent Literature 1 discloses a vehicle control system which includes means for reading a virtual map of a local area including a permitted area and a restricted area from a memory; means for determining a current position of a vehicle by utilizing a navigation apparatus; and means for predicting an intrusion into the restricted area by utilizing a mapping processor together with the current vehicle position. According to the vehicle control system, it is possible, when the vehicle enters the restricted area, to interrupt with the vehicle's motion capability and reduce the vehicle's speed while the vehicle is in the restricted area. Also, if the vehicle stays in the restricted area for a predetermined amount of time, it is possible to disable the vehicle's forward motion capability, and further, if the vehicle stays in the restricted area beyond the predetermined amount of time, to permanently disable the vehicle's forward motion capability.
In US 2018/154899 A1 a system for controlling a vehicle navigating a roadway is described, including a perception module that generates sensor data and outputs a cost map and traffic data associated with traffic objects.
US 2020/041995 A1 relates to enabling provision of remote operation for a vehicle. An example method includes receiving sensor data from the vehicle. The method may further include determining a latency of a communication link.
US 2018/164825 A1 relates to a method for adaptive risk modeling for an autonomous vehicle, the method comprising: retrieving parameters of an identified driving mission of the autonomous vehicle.

### CITATION LIST

### PATENT LITERATURE

Patent Literature 1: JP-A 2005-521170

### SUMMARY OF INVENTION

### TECHNICAL PROBLEM

As described, according to the vehicle control system disclosed in Patent Literature 1, it is possible to prompt a user of the vehicle to drive the vehicle out of the restricted area by restricting the vehicle's motion capability when the vehicle enters the restricted area. However, driving of the vehicle itself is still left to the user and, therefore, if the user does not intend to move out, the vehicle would keep staying in the restricted area and would not leave the restricted area even when the vehicle must immediately be moved away from the restricted area. As understood, according to the technique disclosed in Patent Literature 1, there is a possibility that it is impossible to drive the vehicle appropriately according to each of the permitted area and the restricted area.

Therefore, a primary object of the present invention is to provide a vehicle capable of appropriately being driven in accordance with a driving zone, and a mobile terminal utilized therefor. An aim is to provide for a concept that allows easy determination of an operation.
This achieved by a vehicle as defined in the appended set of claims.

### SOLUTION TO PROBLEM

According to an aspect of the present invention, there is provided a vehicle as defined in claim 1

Also, there is provided a mobile terminal as defined in claim 12.

In the invention described above, when the vehicle travels in a zone which includes the free driving zone and the alternative driving zone, a determination is made based on the position information regarding the position of the vehicle as to whether the vehicle is in the free driving zone or in the alternative driving zone. If the vehicle is in the free driving zone, the vehicle is set to the free driving mode where a human driver is able to drive the vehicle freely. On the other hand, if the vehicle is in the alternative driving zone, the vehicle is set to the alternative driving mode where the vehicle is able to be driven automatically instead of by the human driver. The vehicle operates in accordance with the driving mode to which it is set. Therefore, it is possible to drive the vehicle appropriately in accordance with the driving zone.

Preferably, the vehicle further includes a position detection portion for detecting a position of the vehicle as the position information, and a storage portion for storing area information including the free driving zone and the alternative driving zone. With this arrangement, the first determination portion determines whether the vehicle is in the free driving zone or in the alternative driving zone based on a detection result from the position detection portion and the area information. In this case, it is possible to easily determine whether the vehicle is in the free driving zone or in the alternative driving zone based on a comparison between the position of the vehicle which is detected by the positioning detecting portion and the area information stored in the storage portion.

Further, preferably, the vehicle further includes a zone detection portion for detecting zone information, as the position information, indicating whether the vehicle is in the free driving zone or in the alternative driving zone. With this arrangement, the first determination portion determines whether the vehicle is in the free driving zone or in the alternative driving zone based on a detection result from the zone detection portion. In this case, for example, each driving zone of the vehicle is, in advance, provided with a member which displays (emits) the zone information (indicating the free driving zone or the alternative driving zone), and when the vehicle is driven, the zone detection portion detects the zone information. With such a simple arrangement, it is possible to easily determine whether the vehicle is in the free driving zone or in the alternative driving zone. Also, the member which displays (emits) the zone information should simply be disposed within the driving zone, at a position detectable by the zone detection portion. Therefore, the arrangements are applicable easily to a variety of driving zones of different terrains and sizes.

Further, preferably, the vehicle further includes an input portion for inputting a signal of the driving mode of the vehicle. With this arrangement, the mode setting portion sets the vehicle to the free driving mode even when the vehicle is in the alternative driving zone if the signal of the free driving mode is inputted by the input portion. In this case, even when the vehicle is in the alternative driving zone, if it is necessary to allow free driving of the vehicle, then the necessity is easily met by simply inputting the signal for the free driving mode by means of the input portion. In other words, even if the vehicle is in the alternative driving zone, it is possible to appropriately drive the vehicle freely.

Preferably, the input portion is capable of inputting a signal of the alternative driving mode as the signal of the driving mode of the vehicle; the alternative driving mode includes a partially alternative driving mode in which steering, speed setting and acceleration/deceleration of the vehicle are performed automatically; and the mode setting portion sets the vehicle to the partially alternative driving mode if the signal of the alternative driving mode is inputted by the input portion when the vehicle is in the alternative driving zone. In this case, when it is desirable to select the partially alternative driving mode in which steering, speed setting and acceleration/deceleration are performed automatically for the vehicle traveling in the alternative driving zone, it is possible by simply inputting the alternative driving mode signal by means of the input portion to set the mode easily.

Further, preferably, the alternative driving mode includes a fully alternative driving mode in which steering, speed setting, acceleration/deceleration and starting/stopping of the vehicle are performed automatically. In this case, by using the fully alternative driving mode in which steering, speed setting, acceleration/deceleration and starting/stopping of the vehicle are performed automatically, it becomes possible that the controller automatically performs all aspects of vehicle driving in place of the human driver. The arrangement is suitable for a case where the alternative driving zone is a no entry zone for the vehicle, and the vehicle must get out of the zone immediately.

Further, preferably, the vehicle further includes a second determination portion for determining whether or not the vehicle is capable of performing alternative driving normally. With this arrangement, the controller cancels the alternative driving mode if the second determination portion determines that the vehicle is not capable of performing alternative driving normally in the alternative driving mode. In this case, if the vehicle is incapable of performing normal alternative driving in the alternative driving mode, it is possible to control operation of the vehicle in another driving mode by canceling the alternative driving mode.

Preferably, the first determination portion is capable of further determining whether or not the vehicle is in a remote driving zone where remote driving is allowed, and the mode setting portion sets the vehicle to a remote driving mode in which the vehicle is able to be driven by means of remote control instead of by the human driver if the first determination portion determines that the vehicle is in the remote driving zone. In this case, if the vehicle is in the remote driving zone, the vehicle is set to the remote driving mode in which the vehicle is able to be driven by means of remote control instead of by the human driver and the vehicle operates in accordance with the remote driving mode. Therefore, it is possible to drive the vehicle even more appropriately in accordance with the driving zone.

Further, preferably, the vehicle further includes a third determination portion for determining whether or not the vehicle is capable of performing remote driving normally. With this arrangement, the controller cancels the remote driving mode if the third determination portion determines that the vehicle is not capable of performing remote driving normally in the remote driving mode. In this case, if the vehicle is incapable of performing normal remote driving in the remote driving mode, it is possible to control operation of the vehicle in another driving mode by canceling the remote driving mode.

Further, preferably, the vehicle further includes a fourth determination portion for determining whether or not the vehicle is capable of driving normally. With this arrangement, the controller sets the vehicle to a driving-disabled mode in which the vehicle is able to be stopped if the fourth determination portion determines that the vehicle is not capable of driving normally. In this case, if the vehicle is incapable of performing normal driving, it is possible to stop the vehicle by setting the vehicle to the driving-disabled mode.

Preferably, the free driving zone includes a two-way traffic zone, and the alternative driving zone includes a one-way traffic zone. In this case, the free driving mode in which the human driver is able to drive the vehicle freely is suitable to the two-way traffic zone in which the vehicle travels in a two-way traffic fashion. On the other hand, the alternative driving mode in which the vehicle is able to be driven automatically instead of by the human driver is suitable to the one-way traffic zone.

Further, preferably, the alternative driving zone includes a predetermined path on which the vehicle is capable of driving automatically. In this case, the alternative driving mode in which the vehicle is driven automatically instead of by the human driver is suitable to the predetermined path on which it is possible for the vehicle to drive automatically.

Since a golf course has zones where free driving is allowed and zones where free driving is limited and alternative driving is preferred, the present invention is suitably utilized in golf carts.

It should be noted here that in the "free driving mode", typically, a human driver manipulates steering, speed setting, acceleration/deceleration and starting/stopping of the vehicle freely.

The "alternative driving mode" includes the partially alternative driving mode and the fully alternative driving mode.

### ADVANTAGEOUS EFFECTS OF INVENTION

According to the present invention, it is possible to drive the vehicle appropriately to a driving zone.

### BRIEF DESCRIPTION OF DRAWINGS

Fig. 1 is a block diagram which shows an electrical configuration of a vehicle, a base station and others according to an embodiment of the present invention.
Fig. 2(a) is an illustrative drawing which shows an example of a main key; Fig. 2(b) is an illustrative drawing which shows another example of the main key.
Fig. 3 is a state transition diagram which shows a case where a driving mode includes a partially alternative driving mode, a free driving mode and a remote driving mode.
Fig. 4 is an illustrative drawing to explain driving operations in a case where the driving mode includes the partially alternative driving mode, the free driving mode and the remote driving mode.
Fig. 5 is a state transition diagram which shows a case where the driving mode includes a fully alternative driving mode, a free driving mode and a remote driving mode.
Fig. 6 is an illustrative drawing to explain driving operations in a case where the driving mode includes the fully alternative driving mode, the free driving mode and the remote driving mode.

### DESCRIPTION OF EMBODIMENTS

Hereinafter, preferred embodiments of the present invention will be described with reference to the drawings. The description will cover cases where a vehicle 10 according to an embodiment of the present invention is applied to a golf cart.

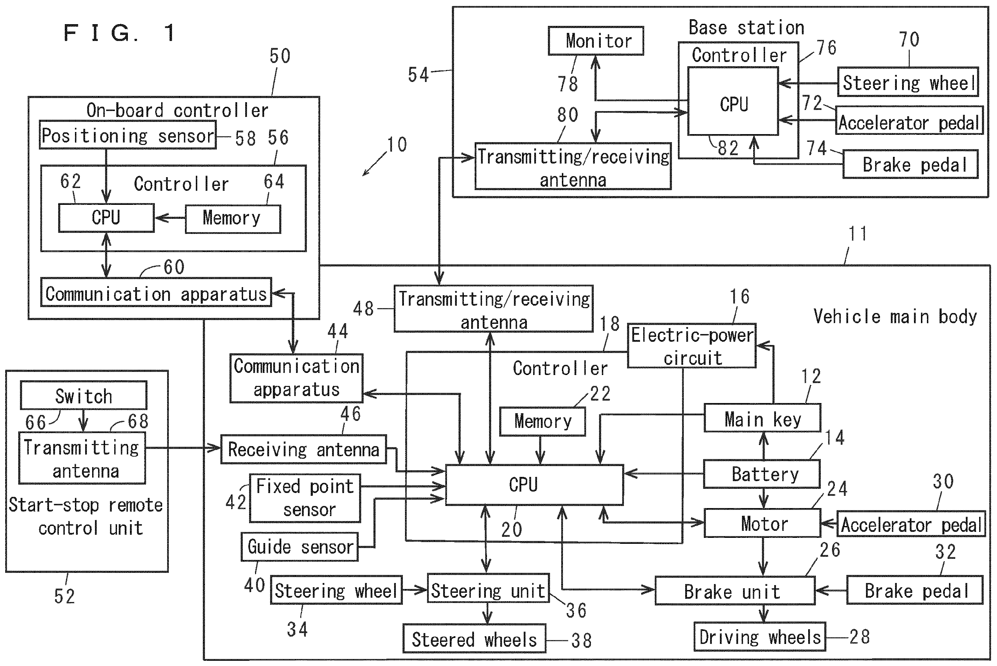

Referring to Fig. 1, the vehicle 10 includes a vehicle main body 11.

The vehicle main body 11 includes a main key 12, a battery 14, an electric-power circuit 16 and a controller 18.

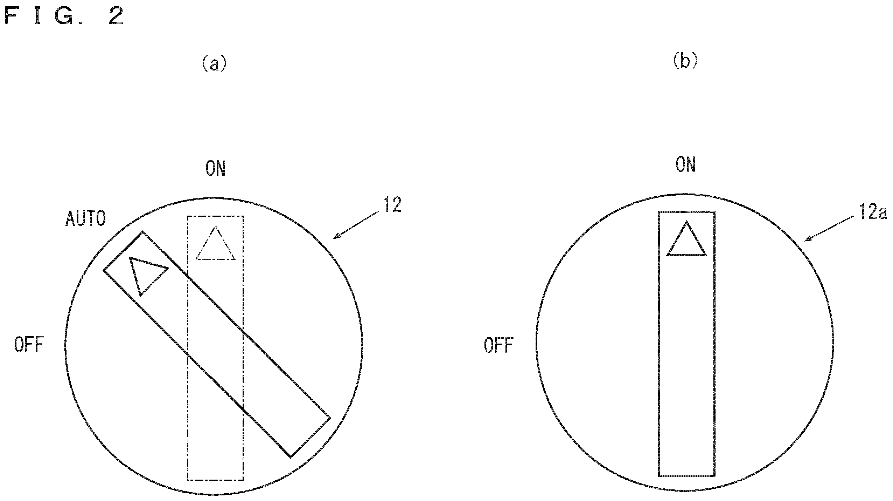

Referring to Fig. 2(a), the main key 12 is switched to either one of: "OFF" which is a position to turn off electric power of the vehicle 10; "ON" which is a position to turn on the electric power and set the vehicle 10 in a free driving mode; and "AUTO" which is a position to turn on the electric power and set the vehicle 10 in a partially alternative driving mode. The battery 14 is provided by 12V batteries, for example. When the main key 12 is turned ON, electric power from the battery 14 is inputted to the electric-power circuit 16, and the power circuit 16 outputs required power to the controller 18.

The controller 18 includes a CPU 20 and a memory 22.

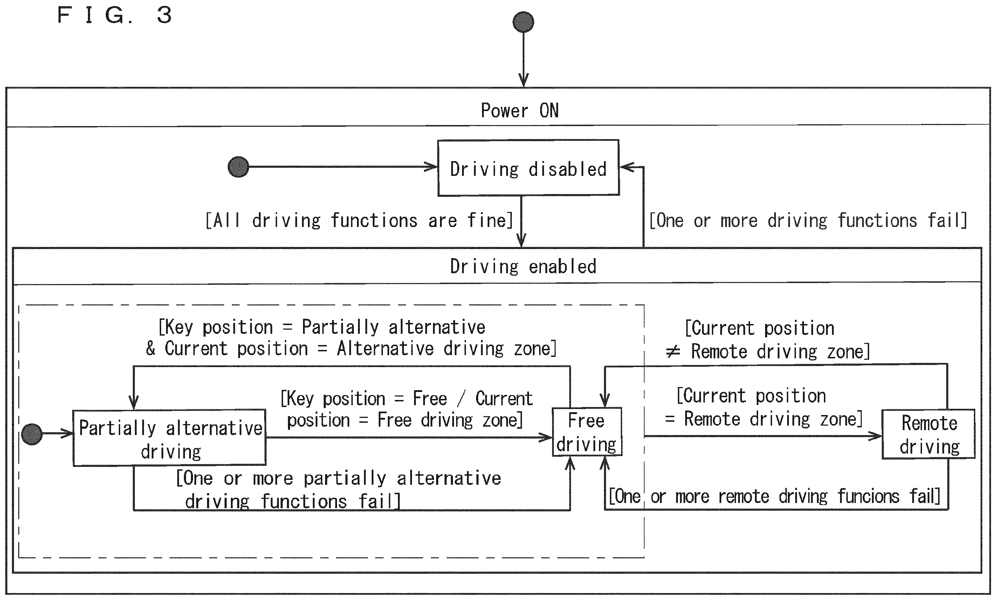

The CPU 20 controls operation of various components of the vehicle 10. The CPU 20 is given information from the battery 14, such as information indicating remaining battery charge. The memory 22 stores programs and so forth for performing operations shown in Fig. 3. The main key 12 inputs a signal of the driving mode, which is then given, via the CPU 20, to a CPU 62 of an on-board controller 50 which will be described later.

The vehicle main body 11 further includes a motor 24, a brake unit 26, driving wheels 28, an accelerator pedal 30 and a brake pedal 32.

The motor 24 is supplied with electric power from the battery 14, and the driving wheels 28 are propelled by the motor 24. The brake unit 26 is provided between the motor 24 and the driving wheels 28. The brake unit 26 provides braking of the driving wheels 28. In the free driving mode, an output of the motor 24 is adjusted in accordance with an amount of operation made to the accelerator pedal 30, and a braking power of the braking unit 26 is adjusted in accordance with an amount of operation made to the brake pedal 32, to control rotation of the driving wheels 28.

The vehicle main body 11 further includes a steering wheel 34, a steering unit 36 and steered wheels 38.

The steering wheel 34 is connected with a steering unit 36. The steering unit 36 is connected with the steered wheels 38. In the free driving mode, the steering unit 36 is driven by means of the steering wheel 34 and the steered wheels 38 are steered accordingly.

The vehicle main body 11 further includes a guide sensor 40 and a fixed point sensor 42.

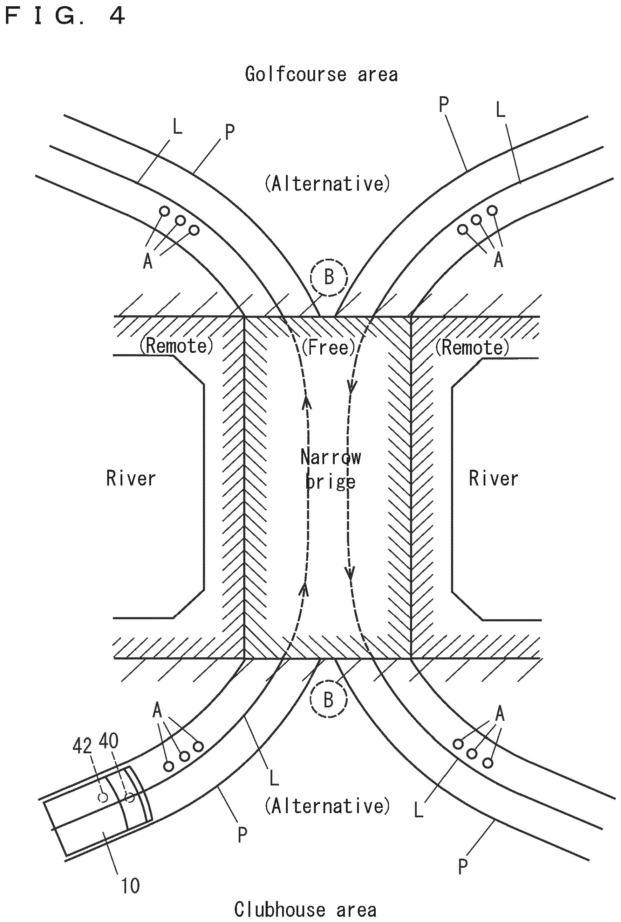

Referring to Fig. 4, the guide sensor 40 is provided on a bottom portion of the vehicle 10 to face the ground surface for detection of a magnetic field emitted by a guide line L installed along a predetermined path P. The fixed point sensor 42 is provided on a bottom portion of the vehicle 10 to face the ground surface for reading of a signal from a fixed point member A installed along the predetermined path P.

In the partially alternative driving mode, the vehicle 10 drives automatically along the guide line L installed in a center of the predetermined path P. Partially alternative driving is allowed in an alternative driving zone where the guide line L is buried in the ground beneath the predetermined path P. The guide sensor 40 receives the magnetic field emitted by the guide line L and outputs a detection signal to the CPU 20. The CPU 20 controls the steering unit 36 so that the guide line L is kept within a predetermined range from the center of the guide sensor 40 in the width direction of the vehicle. Thus, the vehicle 10 performs partially alternative driving (automatic driving) on the predetermined path P along the guide line L.

Also, along the guide line L, the fixed point members A are buried at a plurality of predetermined positions. The fixed point members A are composed by a combination of a plurality of magnets, for example. The fixed point sensor 42 is capable of reading magnetic-pole information from the fixed point member A, and is provided by a magnetic-pole sensor for example. The fixed point member A transmits, for example, an instruction signal which indicates an instructed speed of the vehicle to the vehicle 10. As the vehicle 10 passes above the fixed point member A, the fixed point sensor 42 receives the instruction signal from the fixed point member A which is being passed, and outputs the instruction signal to the CPU 20. The CPU 20 controls driving, stopping, deceleration and so on of the vehicle 10 in accordance with the instruction signal.

Returning to Fig. 1, as understood, in the partially alternative driving mode, the CPU 20 is given signals and information from the guide sensor 40 and the fixed point sensor 42. The CPU 20 outputs instruction signals based on these signals and information, to the steering unit 36, the motor 24 and the brake unit 26, to control steering, propelling and braking of the vehicle 10.

The vehicle main body 11 further includes a communication apparatus 44, a receiving antenna 46 and a transmitting/receiving antenna 48. The vehicle 10 further includes the on-board controller 50 and a start-stop remote control unit 52.

The vehicle main body 11 is communicatively connected, via the communication apparatus 44, with the on-board controller 50 installed on the vehicle main body 11, receives signals from the start-stop remote control unit 52 via the receiving antenna 46, and transmits/receives signals to/from a base station 54 via the transmitting/receiving antenna 48.

The on-board controller 50 includes a controller 56, a positioning sensor 58 and a communication apparatus 60. The controller 56 includes a CPU 62 and a memory 64. The memory 64 stores area information including a free driving zone where free driving is allowed, an alternative driving zone where alternative driving is allowed, and a remote driving zone where remote driving is allowed. The positioning sensor 58 receives a GPS signal, for example, and gives it to the CPU 62. Based on the GPS signal, the CPU 62 detects a current position of the vehicle 10 as position information regarding the position of vehicle 10, and determines which of the free driving zone, the alternative driving zone and the remote driving zone the vehicle 10 is in, based on a result of the detection and the area information stored in the memory 64. The CPU 62 is given the signal of the driving mode selected by the main key 12, via the CPU 20, the communication apparatus 44 and the communication apparatus 60. Based on the signal of the driving mode and the information indicating the driving zone in which the vehicle 10 is, the CPU 62 sets the driving mode to either one of the free driving mode, the partially alternative driving mode and the remote driving mode. A signal which indicates the driving mode set by the CPU 62 is transmitted to the communication apparatus 44 of the vehicle main body 11 via the communication apparatus 60, and given to the CPU 20 of the vehicle main body 11.

The start-stop remote control unit 52 includes a switch 66 and a transmitting antenna 68. Depending on an operation made to the switch 66, a starting signal or a stopping signal is transmitted from the transmitting antenna 68, received by the receiving antenna 46 of the vehicle main body 11, given to the CPU 20 of the vehicle main body 11, and the vehicle 10 is started or stopped.

The base station 54 includes a steering wheel 70, an accelerator pedal 72, a brake pedal 74, a controller 76, a monitor 78 and a transmitting/receiving antenna 80. When driving the vehicle 10 in the remote driving mode, an operator at the base station 54 operates the steering wheel 70, the accelerator pedal 72 and the brake pedal 74. The controller 76 includes a CPU 82. Based on instruction signals given by the steering wheel 70, the accelerator pedal 72 and the brake pedal 74, the CPU 82 transmits instruction signals for remote control of the vehicle 10 from the transmitting/receiving antenna 80. Then, the transmitting/receiving antenna 48 of the vehicle main body 11 receives the instruction signals, and gives them to the CPU 20 of the vehicle main body 11, whereby the vehicle 10 is remotely driven. The monitor 78 displays various information such as the position of the vehicle 10.

In the present embodiment, the main key 12 represents the input portion. The CPU 20 represents the controller, the second determination portion, the third determination portion and the fourth determination portion. The positioning sensor 58 and the CPU 62 represent the position detection portion. The CPU 62 represents the first determination portion and the mode setting portion. The memory 64 represents the storage portion which stores the area information.

According to the vehicle 10 as has been described, when set to the partially alternative driving mode, the CPU 20 performs automatic control of steering, speed setting and acceleration/deceleration of the vehicle 10 by controlling the steering unit 36, the motor 24 and the brake unit 26 based on information from the guide sensor 40 and the fixed point sensor 42. The starting and stopping of the vehicle 10 is performed, for example, through operation of the start-stop remote control unit 52.

When set to the free driving mode, the steering unit 36, the motor 24 and the brake unit 26 are operated not by control signals from the CPU 20 but by operations made to the steering wheel 34, the accelerator pedal 30 and the brake pedal 32 respectively.

When set to the remote driving mode, the CPU 20 controls the steering unit 36, the motor 24 and the brake unit 26 based on a remote-control instruction signal supplied wirelessly from the base station 54, i.e., steering, speed setting, acceleration/deceleration and starting/stopping of the vehicle 10 are performed by means of remote control.

It should be noted here that if one or more of the driving functions in the vehicle 10 fail in a driving-enabled state, the CPU 20 disables driving of the vehicle 10. For example, when the CPU 20 detects that remaining battery charge is lower than a predetermined level based on information supplied from the battery 14, it determines that there is a failure in a driving function, and disables driving of the vehicle 10.

Description will now cover state transitions of the vehicle 10.

Referring to Fig. 3, first, as the main key 12 is turned to "AUTO" which indicates the partially alternative driving mode, the electric-power circuit 16 is turned on, and the CPU 20 defaults the vehicle 10 to a driving-disabled state and checks driving functions of the vehicle 10. If all of the driving functions of the vehicle 10 are fine, driving of the vehicle 10 is enabled, or more specifically the CPU 20 defaults the vehicle 10 to the partially alternative driving mode.

As far as the main key 12 points to "AUTO" and the vehicle 10 is in the alternative driving zone, the vehicle 10 drives in the partially alternative driving mode. In other words, if a signal indicating the alternative driving mode is inputted by the main key 12, and the vehicle 10 is in the alternative driving zone, the CPU 62 sets the vehicle 10 to the partially alternative driving mode, and the CPU 20 drives the vehicle 10 in accordance with the partially alternative driving mode.

However, when the main key 12 of the vehicle 10 which is driving in the partially alternative driving mode is switched to "ON" which indicates the free driving mode or when the vehicle 10 has entered the free driving zone, then the CPU 62 switches the driving mode of the vehicle 10 to the free driving mode. Therefore, when the signal indicating the free driving mode is inputted from the main key 12, the CPU 62 sets the vehicle 10 to the free driving mode even if the vehicle 10 is in the alternative driving zone. The CPU 20 drives the vehicle 10 in accordance with the free driving mode.

Also, if one or more of the partially alternative driving functions in the vehicle 10 fail while driving in the partially alternative driving mode, the CPU 20 switches the mode to the free driving mode. In other words, in the partially alternative driving mode, the CPU 20 cancels the partially alternative driving mode if it determines that the vehicle 10 is incapable of performing normal partially alternative driving. For example, there can be a situation where there is a broken guide line L or a damaged fixed point member A; there is an obstacle on a guide line L or a fixed point member A; or the guide sensor 40 itself or the fixed point sensor 42 itself is broken. In such cases as described above, the CPU 20 is unable to receive signals from the guide sensor 40 or from the fixed point sensor 42 properly, the partially alternative driving may become hindered.

If the vehicle 10 driving in the partially alternative driving mode or the free driving mode has entered the remote driving zone, the CPU 62 switches the mode to the remote driving mode. The CPU 20 drives the vehicle 10 in accordance with the remote driving mode. On the other hand, when the vehicle 10 driving in the remote driving mode has moved out of the remote driving zone, the CPU 62 switches the mode to the free driving mode.

Also, if one or more of the remote driving functions in the vehicle 10 fail while driving in the remote driving mode, the CPU 20 switches the mode to the free driving mode. In other words, in the remote driving mode, the CPU 20 cancels the remote driving mode if it determines that the vehicle 10 is incapable of performing normal remote driving. For example, there can be a situation where the CPU 20 is unable to receive remote-control instruction signals from the base station 54 clearly.

Also, if one or more of the driving functions in the vehicle 10 fail in the driving-enabled state, the CPU 20 brings the vehicle 10 back to the driving-disabled state. In other words, if the CPU 20 determines that the vehicle 10 is unable to drive normally, it sets the vehicle 10 to a driving-disabled mode in which the vehicle 10 is stopped.

Referring to Fig. 4, description will cover how the vehicle 10 will be driven specifically.

Here, the description will assume a golf course, where a clubhouse area and a golf course area are connected with each other with a narrow bridge, and a golf cart as the vehicle 10 is supposed to cross the bridge from the clubhouse area to the golf course area, travel through each hole and then cross the bridge again to return to the clubhouse area. In this case, the clubhouse area and the golf course area include the alternative driving zone, and the bridge includes the free driving zone. The alternative driving zone includes a one-way traffic zone, and a predetermined path P through which the vehicle 10 is capable of performing the partially alternative driving (automatic driving). The free driving zone includes a two-way traffic zone. Also, each of the clubhouse area, the golf course area and the bridge includes the remote driving zone in their respective perimeter regions close to a river.

First, as shown in Fig. 4, the vehicle 10 starts from the clubhouse area, with the main key 12 turned to "AUTO". In the clubhouse area (alternative driving zone), the vehicle 10 performs automatic driving on the predetermined path P in the partially alternative driving mode; and as it enters the bridge, the mode switches to the free driving mode for free driving. Then, when the vehicle 10 leaves the bridge and enters the golf course area, the mode switches again to the partially alternative driving mode for automatic driving. In the golf course area, driving in the partially alternative driving mode is continued unless the main key 12 is switched to "ON" or one or more of the partially alternative driving functions fail. Thereafter, after all of the holes have been passed and on the way back to the clubhouse, the vehicle 10 enters the bridge again from the golf course area. Then, the vehicle 10 is switched to the free driving mode for free driving. Then, when the vehicle 10 leaves the bridge and enters the clubhouse area, the mode switches again to the partially alternative driving mode for automatic driving.

Now assume that the vehicle 10 happens to move toward the river for some reason, from the free driving zone or the partially alternative driving zone, and has entered the remote driving zone. In order to avoid a risk of falling into the river, the mode switches to the remote driving mode which enables driving from the base station 54. When the vehicle 10 in the remote driving mode moves out of the remote driving zone, the vehicle 10 is first switched to the free driving mode and then travels in the driving mode of the zone where the vehicle 10 is located.

According to the vehicle 10 as described above, when the vehicle 10 is traveling in an area which includes the free driving zone, the alternative driving zone and the remote driving zone, with the main key 12 turned to "AUTO", a determination is made as to whether the vehicle 10 is in the free driving zone, the alternative driving zone or the remote driving zone based on position information regarding the position of the vehicle 10. If the vehicle 10 is in the free driving zone, the vehicle 10 is set to the free driving mode in which the human driver freely drives the vehicle 10. If the vehicle 10 is in the alternative driving zone, the vehicle 10 is set to the alternative driving mode (partially alternative driving mode) in which the vehicle 10 is driven automatically instead of by the human driver. If the vehicle 10 is in the remote driving zone, the vehicle 10 is set to the remote driving mode in which the vehicle 10 is driven by means of remote control instead of by the human driver. The vehicle 10 operates in accordance with the driving mode to which it is set. Therefore, it is possible to drive the vehicle 10 appropriately in accordance with the driving zone.

Even when the vehicle 10 is in the alternative driving zone, if it is necessary to allow free driving of the vehicle 10, then the main key 12 should simply be turned to input a signal for the free driving mode to meet the need, i.e., even if the vehicle 10 is in the alternative driving zone, it is possible to appropriately make the vehicle 10 drive freely.

When it is desirable to select the partially alternative driving mode in which steering, speed setting and acceleration/deceleration are performed automatically for the vehicle 10 traveling in the alternative driving zone, it is possible to set the mode easily with a simple operation on the main key 12, to input an alternative driving mode signal.

The free driving mode in which the human driver drives the vehicle 10 freely is suitable to the two-way traffic zone in which the vehicle 10 travels in a two-way traffic manner. On the other hand, the alternative driving mode (partially alternative driving mode in particular) in which the vehicle 10 is driven automatically instead of by the human driver is suitable to the one-way traffic zone.

The alternative driving mode (partially alternative driving mode in particular) in which the vehicle 10 is driven automatically instead of by the human driver is suitable to the predetermined path P on which it is possible for the vehicle 10 to drive automatically.

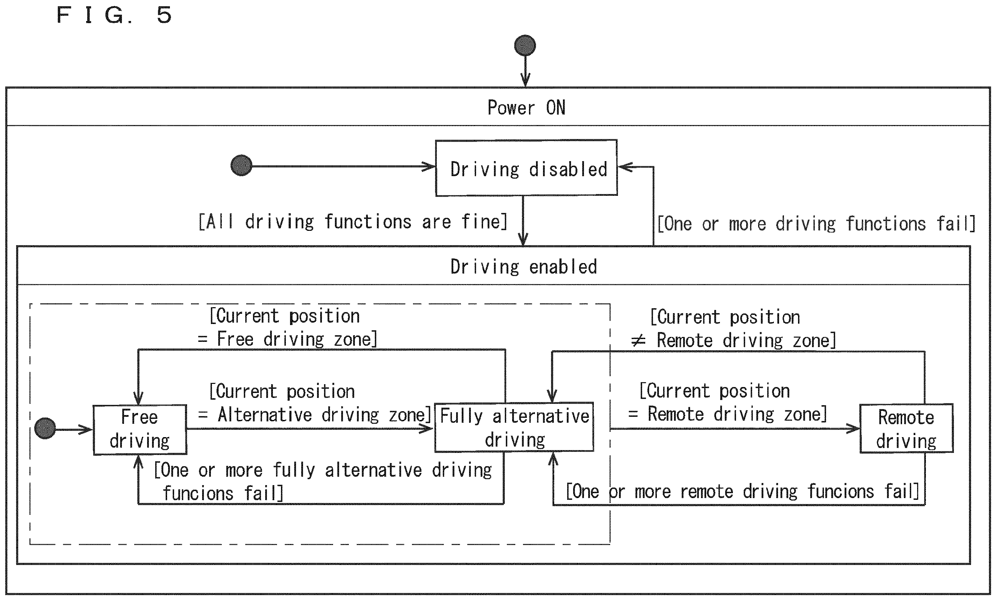

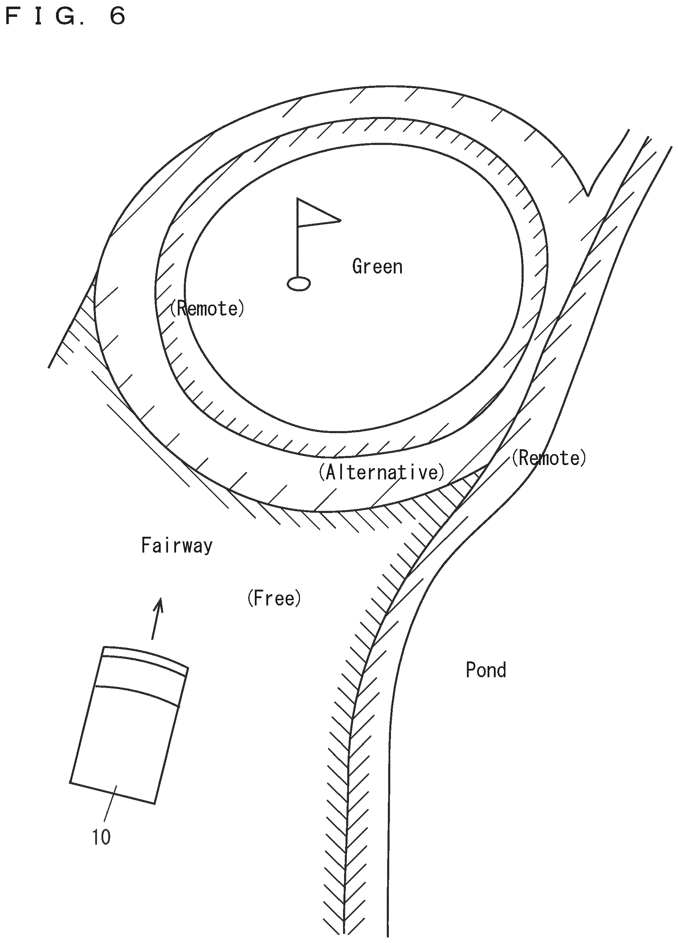

Advantages which will be described below in regard to the present embodiment are also provided by a variation of the embodiment which will be described later with reference to Fig. 5 and Fig. 6.

It is possible to easily determine whether the vehicle 10 is in the free driving zone, the alternative driving zone or the remote driving zone based on comparison between the position of the vehicle 10 which is detected by the positioning sensor 58 and the CPU 62 and the area information stored in the memory 64.

If the vehicle 10 is incapable of performing normal alternative driving in the alternative driving mode, it is possible to control operation of the vehicle 10 in another driving mode by canceling the alternative driving mode.

If the vehicle 10 is incapable of performing normal remote driving in the remote driving mode, it is possible to control operation of the vehicle 10 in another driving mode by canceling the remote driving mode.

If the vehicle 10 is incapable of performing normal driving, it is possible to stop the vehicle 10 by setting the vehicle 10 to the driving-disabled mode.

Since a golf course has zones where free driving is allowed and zones where free driving is limited and alternative driving is preferred, the present invention is suitably utilized in golf carts.

Next, description will cover a variation of the vehicle 10.

In the present example, a main key 12a shown in Fig. 2(b) is utilized instead of the main key 12 shown in Fig. 2(a). The main key 12a does not have the "AUTO" position for the partially alternative driving mode. The main key 12a is switched either to "OFF" which is a position to turn off electric power of the vehicle 10 or "ON" which is a position to turn on the electric power and set the vehicle 10 in the free driving mode. In this example, driving modes include a free driving mode, a fully alternative driving mode and a remote driving mode. Since the partially alternative driving mode is not included, the guide sensor 40 and the fixed point sensor 42 are not essentially required. The memory 22 stores programs and so forth for performing operations shown in Fig. 5. In the present embodiment, the main key 12a represents the input portion. The other configurations are identical with those in the previous embodiment.

According to the vehicle 10 as described above, when being driven, the main key 12a is switched to "ON", and the CPU 62 sets the driving mode to either one of the free driving mode, the fully alternative driving mode and the remote driving mode based on information indicating which driving zone the vehicle 10 is in.

If set to the fully alternative driving mode, the CPU 20 performs steering, speed setting, acceleration/deceleration and starting/stopping of the vehicle 10 automatically based on programs stored in the memory 22. If set to the free driving mode or the remote driving mode, the same operations as described in the previous embodiment are performed.

Referring to Fig. 5, first, as the main key 12a is turned to "ON" which indicates the free driving mode, the electric-power circuit 16 is turned on, and the CPU 20 defaults the vehicle 10 to a driving-disabled state and checks driving functions of the vehicle 10. If all of the driving functions are fine, driving of the vehicle 10 is enabled, or more specifically the CPU 20 defaults the vehicle 10 to the free driving mode.

As far as the vehicle 10 is in the free driving zone, the vehicle 10 drives in the free driving mode. In other words, if a signal representing the free driving mode is inputted by the main key 12a, and the vehicle 10 is in the free driving zone, the CPU 62 sets the vehicle 10 to the free driving mode, and the CPU 20 drives the vehicle 10 in accordance with the free driving mode.

However, if the vehicle 10 driving in the free driving mode has entered the alternative driving zone, then the CPU 62 switches the driving mode of the vehicle 10 to the fully alternative driving mode. The CPU 20 drives the vehicle 10 in accordance with the fully alternative driving mode.

On the other hand, if the vehicle 10 driving in the fully alternative driving mode has entered the free driving zone, then the CPU 62 switches the driving mode of the vehicle 10 to the free driving mode. Also, if one or more of the fully alternative driving functions in the vehicle 10 fail while driving in the fully alternative driving mode, the CPU 20 switches the mode to the free driving mode. In other words, in the fully alternative driving mode, the CPU 20 cancels the fully alternative driving mode if it determines that the vehicle 10 is incapable of performing normal alternative driving.

When the vehicle 10 driving in the fully alternative driving mode or the free driving mode has entered the remote driving zone, the CPU 62 switches the mode to the remote driving mode. The CPU 20 drives the vehicle 10 in accordance with the remote driving mode. On the other hand, if the vehicle 10 driving in the remote driving mode has moved out of the remote driving zone, the CPU 62 switches the mode to the fully alternative driving mode. Also, if one or more of the remote driving functions in the vehicle 10 fail while driving in the remote driving mode, the CPU 20 switches the mode to the fully alternative driving mode.

Also, if one or more of the driving functions in the vehicle 10 fail in the driving-enabled state, the CPU 20 brings the vehicle 10 back to the driving-disabled state.

Referring to Fig. 6, description will cover how the vehicle 10 will be driven specifically.

Here, an assumption will be made for a case where, in a golf course, a golf cart which is provided as the vehicle 10 is allowed to drive to a fairway near a green of the golf course. In this example, the fairway is in front of the green, and there is a pond on the right side of the green. The fairway includes the free driving zone. Between the green and the fairway there is a buffer belt, of which a side adjacent to the fairway is the alternative driving zone, and the side adjacent to the green is the remote driving zone. Also, there is a buffer belt designated as the remote driving zone between the fairway and the pond. In the alternative driving zone, the fully alternative driving mode provides automatic control on all of the steering, speed setting, acceleration/deceleration and starting/stopping of the vehicle 10.

First, with the main key 12a turned to "ON", the vehicle 10 is freely driven in the golf course including the fairway. Then, on its way from the fairway toward the green, the vehicle 10 enters from the free driving zone of the fairway into the alternative driving zone of the buffer belt. Then, the CPU 62 switches the vehicle 10 to the fully alternative driving mode, in which the CPU 20 drives the vehicle 10 back to the fairway. In the alternative driving zone, driving under the fully alternative driving mode is continued if fully alternative driving functions are normal. In the fully alternative driving mode, a predetermined method is followed to drive the vehicle 10 away from the alternative driving zone. For example, the vehicle 10 is driven to back up straightly, driven backward on the same route as it came along, steering to move away from the center of the alternative driving zone, steering to take the shortest route to get out of alternative driving zone and steering to move to a direction of a predetermined exit such that the vehicle 10 is automatically moved. Now assume that the vehicle 10 happens to move farther for some reason from the alternative driving zone toward the green, and has entered the remote driving zone. In order to avoid a risk of intrusion into the green, the mode is switched to the remote driving mode which enables driving from the base station 54. In the remote driving mode, the vehicle 10 is driven by the base station 54 so that it will not enter the green, in other words it is driven back from the remote driving zone to the alternative driving zone, and then switched to fully alternative driving mode, and further, brought back into the free driving zone in the fairway, by the fully alternative driving mode.

Also, assume that the vehicle 10 happens to move from the fairway toward the pond, and has entered the remote driving zone from the free driving zone of the fairway. Then, in order to avoid a risk of falling into the pond, the mode is switched to the remote driving mode which enables driving by the base station 54. In the remote driving mode, the vehicle 10 is driven by the base station 54 so that it will not enter the pond, in other words it is driven back to the free driving zone in the fairway from the remote driving zone. In this case, the vehicle 10 is first switched to the fully alternative driving mode but since it is in the free driving zone, it is soon switched to the free driving mode.

According to the vehicle 10 as described above, when the vehicle 10 travels in an area which includes the free driving zone, the alternative driving zone and the remote driving zone, with the main key 12 turned to "ON", a determination is made as to whether the vehicle 10 is in the free driving zone, the alternative driving zone or the remote driving zone based on position information regarding the position of the vehicle 10. If the vehicle 10 is in the free driving zone, the vehicle 10 is set to the free driving mode in which the human driver freely drives the vehicle 10. If the vehicle 10 is in the alternative driving zone, the vehicle 10 is set to the alternative driving mode (fully alternative driving mode) in which the vehicle 10 is driven automatically instead of by the human driver. If the vehicle 10 is in the remote driving zone, the vehicle 10 is set to the remote driving mode in which the vehicle 10 is driven by means of remote control instead of by the human driver. The vehicle 10 operates in accordance with the driving mode to which it is set. Therefore, it is possible to drive the vehicle 10 appropriately in accordance with the driving zone.

By using the fully alternative driving mode in which steering, speed setting, acceleration/deceleration and starting/stopping of the vehicle 10 are performed automatically, it becomes possible that the CPU 20 automatically performs all aspects of driving of the vehicle 10 in place of the human driver. This is suitable for a case where the alternative driving zone is a no entry zone for the vehicle 10, i.e., the vehicle 10 must get out of the zone immediately.

It should be noted here that there may be an arrangement, for example, that as shown in Fig. 4, a beacon B is provided in a driving zone and the on-board controller 50 is provided with a beacon unit (not illustrated) as a zone detection portion. In this case, the beacon B emits zone information, as position information regarding the position of the vehicle 10, indicating whether the vehicle 10 is in the free driving zone, the alternative driving zone or the remote driving zone, and the beacon unit of the on-board controller 50 detects the zone information. Based on a detection result provided by the beacon unit, the CPU 62 of the on-board controller 50 is able to determine whether the vehicle 10 is in the free driving zone, the alternative driving zone or the remote driving zone.

Also, as another arrangement, each driving zone may be provided with a sign displaying zone information, with the on-board controller 50 provided with a vision sensor (not illustrated) as the zone detection portion. In this case, the vision sensor visually detects the zone information displayed on the sign. Based on a detection result provided by the vision sensor, the CPU 62 of the on-board controller 50 is able to determine whether the vehicle 10 is in the free driving zone, the alternative driving zone or the remote driving zone.

As described above, each driving zone of the vehicle 10 is, in advance, provided with a member which displays (emits) zone information (indicating the free driving zone, the alternative driving zone or the remote driving zone). In these arrangements, when the vehicle 10 is driven, the zone detection portion detects the zone information. With such a simple arrangement, it is possible to easily determine whether the vehicle 10 is in the free driving zone, the alternative driving zone or the remote driving zone. Also, the member which displays (emits) the zone information should simply be disposed within the driving zone, at a position detectable by the zone detection portion. Therefore, the arrangements are easily applicable to a variety of driving zones of different terrains and sizes.

In the embodiment described above, the on-board controller 50 is installed in the vehicle main body 11. However, the invention is not limited by this. The on-board controller 50 need not be installed in the vehicle main body 11 but rather may be provided by a mobile terminal such as a tablet computer separate from the vehicle 10. In this case, preferably, the mobile terminal transmits/receives signals to/from the vehicle 10 in a wireless manner. Also, preferably, the positioning sensor 58 is provided in the vehicle main body 11, and a detection result is supplied to the CPU 62 via the CPU 20, the communication apparatus 44 and the communication apparatus 60.

Such a mobile terminal as described above also provides the same advantages as offered by the case where the on-board controller 50 is installed in the vehicle main body 11.

In the embodiments described above, description was made for cases where the main key 12 or 12a is used to turn on the electric power of the vehicle 10 and set the driving mode. However, the present invention is not limited to this. The main key may be a simple input portion which only switches on or off the electric power of the vehicle 10 without the function to set the driving mode. In this case, under the state where the main key is ON to supply the electric power of the vehicle 10, the CPU 62 determines whether the vehicle 10 is in the free driving zone, the alternative driving zone or the remote driving zone based on position information regarding the position of the vehicle 10. If the CPU 62 determines that the vehicle 10 is in the free driving zone, then the CPU 62 sets the vehicle 10 to the free driving mode; if the CPU 62 determines that the vehicle 10 is in the alternative driving zone, then the CPU 62 sets the vehicle 10 to the alternative driving mode (partially alternative driving mode or the fully alternative driving mode); and if the CPU 62 determines that the vehicle 10 is in the remote driving zone, the CPU 62 sets the vehicle 10 to the remote driving mode. Then, the CPU 20 controls the operation of the vehicle 10 in accordance with the set driving mode.

In the embodiments described above, description was made for cases where the driving zone includes the free driving zone, the alternative driving zone and the remote driving zone. However, the present invention is not limited to this. The present invention is applicable also to a case where the driving zone does not include the remote driving zone but includes the free driving zone and the alternative driving zone.

In the embodiments described above, description was made for cases where, in the partially alternative driving mode, the guide line L provided in a center of a predetermined path P generates a magnetic field, which is received by the guide sensor 40 and the vehicle 10 performs partially alternative driving on the predetermined path P along the guide line L. However, the present invention is not limited to this. The vehicle 10 may use different means to perform partially alternative driving on the predetermined path P.

In the embodiments described above, description was made for cases where the vehicle 10 performs automatic driving on the predetermined path P by means of the partially alternative driving mode. However, the present invention is not limited to this. The vehicle 10 may be driven automatically by means of the fully alternative driving mode on the predetermined path P.

In the embodiments described above, description was made for cases where the vehicle 10 performs automatic driving in a one-way traffic zone by means of the partially alternative driving mode. However, the present invention is not limited to this. The vehicle 10 may be driven automatically by means of the fully alternative driving mode in the one-way traffic zone.

The fixed point member A provided in the predetermined path P is not limited to a magnet, but may be provided by an RFID (Radio Frequency IDentification) tag.

In the embodiments described above, description was made for cases where the vehicle 10 according to the present invention is applied to a golf cart. However, the invention is not limited to this. The present invention is applicable to any vehicle such as LSM (Low Speed Mobility).

### REFERENCE SIGNS LIST

- 10: Vehicle
- 12, 12a: Main keys
- 14: Battery
- 16: Electric-power circuit
- 18, 56, 76: Controllers
- 20, 62, 82: CPUs
- 22, 64: Memories
- 24: Motor
- 26: Brake unit
- 28: Driving wheels
- 30, 72: Accelerator pedals
- 32, 74: Brake pedals
- 34, 70: Steering wheels
- 36: Steering unit
- 38: Steered wheels
- 40: Guide sensor
- 42: Fixed point sensor
- 50: On-board controller
- 52: Start-stop remote control unit
- 54: Base station
- 58: Positioning sensor
- 66: Switch
- 78: Monitor
- A: Fixed point member
- B: Beacon
- L: Guide line
- P: Predetermined path

## Claims

1. A vehicle (10) capable of driving in a free driving zone where free driving is allowed and an alternative driving zone where alternative driving is allowed, the vehicle (10) comprising:
a first determination portion (62) for determining whether the vehicle (10) is in the free driving zone or in the alternative driving zone based on position information regarding a position of the vehicle (10);
a mode setting portion (62) for setting the vehicle (10) to a free driving mode where a human driver is able to drive the vehicle (10) freely if the first determination portion (62) determines that the vehicle (10) is in the free driving zone but on the other hand setting the vehicle (10) to an alternative driving mode where the vehicle (10) is able to be driven automatically instead of by the human driver if the first determination portion (62) determines that the vehicle (10) is in the alternative driving zone; and
a controller (20) for controlling an operation of the vehicle (10) in accordance with the driving mode set by the mode setting portion (62), wherein
the first determination portion (62) is capable of further determining whether or not the vehicle (10) is in a remote driving zone where remote driving is allowed, and
the mode setting portion (62) is configured to set the vehicle (10) to a remote driving mode in which the vehicle (10) is able to be driven by means of remote control instead of by a human driver if the first determination portion (62) determines that the vehicle (10) is in the remote driving zone; wherein
the vehicle further comprises a zone detection portion (50) for detecting zone information, as the position information, indicating whether the vehicle (10) is in the free driving zone, in the alternative driving zone or in the remote driving zone,
the first determination portion (62) is configured for determining whether the vehicle (10) is in the free driving zone, in the alternative driving zone or in the remote driving zone based on a detection result from the zone detection portion (50);
**characterized in that**
the zone information is information to be displayed or emitted by a member provided in advance in the free driving zone, the alternative driving zone or the remote driving zone;
wherein the vehicle (10) is a golf cart which is allowed to drive to a fairway near a green of a golf course;
wherein the fairway includes the free driving zone;
wherein between the green and the fairway there is a buffer belt, of which a side adjacent to the fairway is the alternative driving zone, and a side adjacent to the green is the remote driving zone.

2. The vehicle (10) according to Claim 1, wherein in the alternative driving zone, the alternative driving mode provides automatic control on all of a steering, a speed setting, an acceleration, a deceleration and a starting/stopping of the vehicle (10).

3. The vehicle (10) according to Claim 1, wherein the zone information is information to be displayed by a member provided in advance in the free driving zone, the alternative driving zone or the remote driving zone.

4. The vehicle (10) according to Claim 1, further comprising an input portion (12) for inputting a signal of the driving mode of the vehicle (10),
wherein the mode setting portion (62) is configured to set the vehicle (10) to the free driving mode even when the vehicle (10) is in the alternative driving zone if a signal of the free driving mode is inputted by the input portion (12).

5. The vehicle (10) according to Claim 4, wherein the input portion (12) is capable of inputting a signal of the alternative driving mode as the signal of the driving mode of the vehicle (10),
the alternative driving mode includes a partially alternative driving mode in which steering, speed setting and acceleration/deceleration of the vehicle (10) are performed automatically, and
the mode setting portion (62) is configured to set the vehicle (10) to the partially alternative driving mode if the signal of the alternative driving mode is inputted by the input portion (12) when the vehicle (10) is in the alternative driving zone.

6. The vehicle (10) according to Claim 1, wherein the alternative driving mode includes a fully alternative driving mode in which steering, speed setting, acceleration/deceleration and starting/stopping of the vehicle (10) are performed automatically.

7. The vehicle (10) according to one of Claims 1 through 4, further comprising a second determination portion (20) for determining whether or not the vehicle (10) is capable of performing alternative driving normally,
wherein the controller (20) is configured to cancel the alternative driving mode if the second determination portion (20) determines that the vehicle (10) is not capable of performing alternative driving normally in the alternative driving mode.

8. The vehicle (10) according to one of Claims 1 to 7, further comprising a third determination portion (20) for determining whether or not the vehicle (10) is capable of performing remote driving normally,
wherein the controller (20) is configured to cancel the remote driving mode if the third determination portion (20) determines that the vehicle (10) is not capable of performing remote driving normally in the remote driving mode.

9. The vehicle (10) according to one of Claims 1 through 6, further comprising a fourth determination portion (20) for determining whether or not the vehicle (10) is capable of driving normally,
wherein the controller (20) is configured to set the vehicle (10) to a driving-disabled mode in which the vehicle (10) is able to be stopped if the fourth determination portion (20) determines that the vehicle (10) is not capable of driving normally.

10. The vehicle (10) according to one of Claims 1 through 9, wherein the free driving zone includes a two-way traffic zone, and
the alternative driving zone includes a one-way traffic zone.

11. The vehicle (10) according to one of Claims 1 through 10, wherein the alternative driving zone includes a predetermined path (P) on which the vehicle (10) is capable of driving automatically.

12. A mobile terminal communicatable with a vehicle (10) capable of driving in a free driving zone where free driving is allowed and an alternative driving zone where alternative driving is allowed, the mobile terminal comprising:
a first determination portion (62) for determining whether the vehicle (10) is in the free driving zone or in the alternative driving zone based on position information regarding a position of the vehicle (10); and
a mode setting portion (62) for setting the vehicle (10) to a free driving mode where a human driver is able to drive the vehicle (10) freely if the first determination portion (62) determines that the vehicle (10) is in the free driving zone but on the other hand setting the vehicle (10) to an alternative driving mode where the vehicle (10) is able to be driven automatically instead of by the human driver if the first determination portion (62) determines that the vehicle (10) is in the alternative driving zone, wherein
the first determination portion (62) is capable of further determining whether or not the vehicle (10) is in a remote driving zone where remote driving is allowed, and
the mode setting portion (62) is configured to set the vehicle (10) to a remote driving mode in which the vehicle (10) is able to be driven by means of remote control instead of by a human driver if the first determination portion (62) determines that the vehicle (10) is in the remote driving zone; wherein
the mobile terminal further comprises a zone detection portion (50) for detecting zone information, as the position information, indicating whether the vehicle (10) is in the free driving zone, in the alternative driving zone or in the remote driving zone,
the first determination portion (62) configured for determining whether the vehicle (10) is in the free driving zone, in the alternative driving zone or in the remote driving zone based on a detection result from the zone detection portion (50);
**characterized in that**
the zone information is information to be displayed or emitted by a member provided in advance in the free driving zone, the alternative driving zone or the remote driving zone;
wherein the vehicle (10) is a golf cart which is allowed to drive to a fairway near a green of a golf course;
wherein the fairway includes the free driving zone;
wherein between the green and the fairway there is a buffer belt, of which a side adjacent to the fairway is the alternative driving zone, and a side adjacent to the green is the remote driving zone.

## Patentansprüche

1. Ein Fahrzeug (10), das in der Lage ist, in einer Freifahrzone, in der freies Fahren erlaubt ist, und einer Alternativfahrzone, in der alternatives Fahren erlaubt ist, zu fahren, wobei das Fahrzeug (10) folgende Merkmale aufweist:
einen ersten Bestimmungsabschnitt (62) zum Bestimmen, ob sich das Fahrzeug (10) in der Freifahrzone oder in der Alternativfahrzone befindet, auf der Basis von Positionsinformationen bezüglich einer Position des Fahrzeugs (10);
einen Moduseinstellabschnitt (62) zum Einstellen des Fahrzeugs (10) auf einen Freifahrmodus, in dem ein menschlicher Fahrer in der Lage ist, das Fahrzeug (10) frei zu fahren, wenn der erste Bestimmungsabschnitt (62) bestimmt, dass sich das Fahrzeug (10) in der Freifahrzone befindet, aber andererseits zum Einstellen des Fahrzeugs (10) auf einen Alternativfahrmodus, in dem das Fahrzeug (10) auf automatische Weise statt von dem menschlichen Fahrer gefahren werden kann, wenn der erste Bestimmungsabschnitt (62) bestimmt, dass sich das Fahrzeug (10) in der Alternativfahrzone befindet; und
eine Steuerung (20) zum Steuern eines Betriebs des Fahrzeugs (10) gemäß dem von dem Moduseinstellabschnitt (62) eingestellten Fahrmodus, wobei
der erste Bestimmungsabschnitt (62) ferner in der Lage ist, zu bestimmen, ob sich das Fahrzeug (10) in einer Fernfahrzone, in der Fernfahren erlaubt ist, befindet oder nicht, und
der Moduseinstellabschnitt (62) dazu konfiguriert ist, das Fahrzeug (10) auf einen Fernfahrmodus einzustellen, in dem das Fahrzeug (10) mittels Fernsteuerung statt von einem menschlichen Fahrer gefahren werden kann, wenn der erste Bestimmungsabschnitt (62) bestimmt, dass sich das Fahrzeug (10) in der Fernfahrzone befindet; wobei
das Fahrzeug ferner einen Zonenerfassungsabschnitt (50) zum Erfassen von Zoneninformationen als die Positionsinformationen aufweist, die angeben, ob sich das Fahrzeug (10) in der Freifahrzone, in der Alternativfahrzone oder in der Fernfahrzone befindet,
der erste Bestimmungsabschnitt (62) dazu konfiguriert ist, auf der Basis eines Erfassungsergebnisses von dem Zonenerfassungsabschnitt (50) zu bestimmen, ob sich das Fahrzeug (10) in der Freifahrzone, in der Alternativfahrzone oder in der Fernfahrzone befindet;
**dadurch gekennzeichnet, dass** die Zoneninformationen Informationen sind, die von einem Element, das im Voraus in der Freifahrzone, der Alternativfahrzone oder der Fernfahrzone bereitgestellt wird, anzuzeigen oder auszusenden sind;
wobei das Fahrzeug (10) ein Golfwagen ist, der zu einem Fairway in der Nähe eines Grüns eines Golfplatzes fahren darf;
wobei das Fairway die Freifahrzone enthält;
wobei zwischen dem Grün und dem Fairway ein Puffergurt vorhanden ist, von dem eine dem Fairway angrenzende Seite die Alternativfahrzone ist und eine dem Grün angrenzende Seite die Fernfahrzone ist.

2. Das Fahrzeug (10) gemäß Anspruch 1, wobei in der Alternativfahrzone der Alternativfahrmodus eine automatische Steuerung hinsichtlich einer Lenkung, einer Geschwindigkeitseinstellung, einer Beschleunigung, einer Verlangsamung und einem Starten/Stoppen des Fahrzeugs (10) bereitstellt.

3. Das Fahrzeug (10) gemäß Anspruch 1, wobei die Zoneninformationen Informationen sind, die von einem Element, das im Voraus in der Freifahrzone, der Alternativfahrzone oder der Fernfahrzone bereitgestellt wird, anzuzeigen sind.

4. Das Fahrzeug (10) gemäß Anspruch 1, das ferner einen Eingabeabschnitt (12) zum Eingeben eines Signals des Fahrmodus des Fahrzeugs (10) aufweist,
wobei der Moduseinstellabschnitt (62) dazu konfiguriert ist, das Fahrzeug (10) selbst dann auf den Freifahrmodus einzustellen, wenn sich das Fahrzeug (10) in der Alternativfahrzone befindet, falls ein Signal des Freifahrmodus durch den Eingabeabschnitt (12) eingegeben wird.

5. Das Fahrzeug (10) gemäß Anspruch 4, wobei der Eingabeabschnitt (12) in der Lage ist, ein Signal des Alternativfahrmodus als das Signal des Fahrmodus des Fahrzeugs (10) einzugeben,
der Alternativfahrmodus einen Teilalternativfahrmodus enthält, in dem Lenkung, Geschwindigkeitseinstellung und Beschleunigung/Verlangsamung des Fahrzeugs (10) automatisch durchgeführt werden, und
der Moduseinstellabschnitt (62) dazu konfiguriert ist, das Fahrzeug (10) auf den Teilalternativfahrmodus einzustellen, falls das Signal des Alternativfahrmodus durch den Eingabeabschnitt (12) eingegeben wird, wenn sich das Fahrzeug (10) in der Alternativfahrzone befindet.

6. Das Fahrzeug (10) gemäß Anspruch 1, wobei der Alternativfahrmodus einen Vollalternativfahrmodus enthält, in dem Lenkung, Geschwindigkeitseinstellung, Beschleunigung/Verlangsamung und Starten/Stoppen des Fahrzeugs (10) automatisch durchgeführt werden.

7. Das Fahrzeug (10) gemäß einem der Ansprüche 1 bis 4, das ferner einen zweiten Bestimmungsabschnitt (20) zum Bestimmen aufweist, ob das Fahrzeug (10) in der Lage ist, alternatives Fahren normal durchzuführen oder nicht,
wobei die Steuerung (20) dazu konfiguriert ist, den Alternativfahrmodus abzubrechen, falls der zweite Bestimmungsabschnitt (20) bestimmt, dass das Fahrzeug (10) nicht in der Lage ist, alternatives Fahren normal in dem Alternativfahrmodus durchzuführen.

8. Das Fahrzeug (10) gemäß einem der Ansprüche 1 bis 7, das ferner einen dritten Bestimmungsabschnitt (20) zum Bestimmen aufweist, ob das Fahrzeug (10) in der Lage ist, Fernfahren normal durchzuführen oder nicht,
wobei die Steuerung (20) dazu konfiguriert ist, den Fernfahrmodus abzubrechen, falls der dritte Bestimmungsabschnitt (20) bestimmt, dass das Fahrzeug (10) nicht in der Lage ist, Fernfahren normal in dem Fernfahrmodus durchzuführen.

9. Das Fahrzeug (10) gemäß einem der Ansprüche 1 bis 6, das ferner einen vierten Bestimmungsabschnitt (20) zum Bestimmen aufweist, ob das Fahrzeug (10) in der Lage ist, normal zu fahren oder nicht,
wobei die Steuerung (20) dazu konfiguriert ist, das Fahrzeug (10) auf einen Fahrsperrmodus einzustellen, in dem das Fahrzeug (10) angehalten werden kann, falls der vierte Bestimmungsabschnitt (20) bestimmt, dass das Fahrzeug (10) nicht in der Lage ist, normal zu fahren.

10. Das Fahrzeug (10) gemäß einem der Ansprüche 1 bis 9, wobei die Freifahrzone eine Zweiwegeverkehrszone enthält, und
die Alternativfahrzone eine Einwegeverkehrszone enthält.

11. Das Fahrzeug (10) gemäß einem der Ansprüche 1 bis 10, wobei die Alternativfahrzone einen vorbestimmten Pfad (P) enthält, auf dem das Fahrzeug (10) in der Lage ist, automatisch zu fahren.

12. Ein mobiles Endgerät, das mit einem Fahrzeug (10) kommunizieren kann, das in der Lage ist, in einer Freifahrzone, in der freies Fahren erlaubt ist, und einer Alternativfahrzone, in der alternatives Fahren erlaubt ist, zu fahren, wobei das mobile Endgerät folgende Merkmale aufweist:
einen ersten Bestimmungsabschnitt (62) zum Bestimmen, ob sich das Fahrzeug (10) in der Freifahrzone oder in der Alternativfahrzone befindet, auf der Basis von Positionsinformationen bezüglich einer Position des Fahrzeugs (10); und
einen Moduseinstellabschnitt (62) zum Einstellen des Fahrzeugs (10) auf einen Freifahrmodus, in dem ein menschlicher Fahrer in der Lage ist, das Fahrzeug (10) frei zu fahren, wenn der erste Bestimmungsabschnitt (62) bestimmt, dass sich das Fahrzeug (10) in der Freifahrzone befindet, aber andererseits zum Einstellen des Fahrzeugs (10) auf einen Alternativfahrmodus, in dem das Fahrzeug (10) auf automatische Weise statt von dem menschlichen Fahrer gefahren werden kann, wenn der erste Bestimmungsabschnitt (62) bestimmt, dass sich das Fahrzeug (10) in der Alternativfahrzone befindet, wobei
der erste Bestimmungsabschnitt (62) ferner in der Lage ist, zu bestimmen, ob sich das Fahrzeug (10) in einer Fernfahrzone, in der Fernfahren erlaubt ist, befindet oder nicht, und
der Moduseinstellabschnitt (62) dazu konfiguriert ist, das Fahrzeug (10) auf einen Fernfahrmodus einzustellen, in dem das Fahrzeug (10) mittels Fernsteuerung statt von einem menschlichen Fahrer gefahren werden kann, wenn der erste Bestimmungsabschnitt (62) bestimmt, dass sich das Fahrzeug (10) in der Fernfahrzone befindet; wobei
das mobile Endgerät ferner einen Zonenerfassungsabschnitt (50) zum Erfassen von Zoneninformationen als die Positionsinformationen aufweist, die angeben, ob sich das Fahrzeug (10) in der Freifahrzone, in der Alternativfahrzone oder in der Fernfahrzone befindet,
der erste Bestimmungsabschnitt (62) dazu konfiguriert ist, auf der Basis eines Erfassungsergebnisses von dem Zonenerfassungsabschnitt (50) zu bestimmen, ob sich das Fahrzeug (10) in der Freifahrzone, in der Alternativfahrzone oder in der Fernfahrzone befindet;
**dadurch gekennzeichnet, dass** die Zoneninformationen Informationen sind, die von einem Element, das im Voraus in der Freifahrzone, der Alternativfahrzone oder der Fernfahrzone bereitgestellt wird, anzuzeigen oder auszusenden sind;
wobei das Fahrzeug (10) ein Golfwagen ist, der zu einem Fairway in der Nähe eines Grüns eines Golfplatzes fahren darf;
wobei das Fairway die Freifahrzone enthält;
wobei zwischen dem Grün und dem Fairway ein Puffergurt vorhanden ist, von dem eine dem Fairway angrenzende Seite die Alternativfahrzone ist und eine dem Grün angrenzende Seite die Fernfahrzone ist.

## Revendications

1. Véhicule (10) apte à une conduite dans une zone de conduite libre où une conduite libre est autorisée et une zone de conduite alternative où une conduite alternative est autorisée, le véhicule (10) comprenant :
une première partie de détermination (62) destinée à déterminer si le véhicule (10) est dans la zone de conduite libre ou dans la zone de conduite alternative sur la base d'informations de position concernant une position du véhicule (10) ;
une partie de réglage de mode (62) destinée à régler le véhicule (10) sur un mode conduite libre où un conducteur humain est apte à conduire le véhicule (10) librement si la première partie de détermination (62) détermine que le véhicule (10) est dans la zone de conduite libre mais, d'autre part, régler le véhicule (10) sur un mode conduite alternative où le véhicule (10) est apte à être conduit de manière automatique à la place de par un conducteur humain si la première partie de détermination (62) détermine que le véhicule (10) est dans la zone de conduite alternative ; et
un dispositif de commande (20) destiné à commander une opération du véhicule (10) conformément au mode de conduite réglé par la partie de réglage de mode (62), dans lequel
la première partie de détermination (62) est apte à déterminer en outre si le véhicule (10) est ou non dans une zone de conduite à distance où la conduite à distance est autorisée, et
la partie de réglage de mode (62) est configurée pour régler le véhicule (10) sur un mode conduite à distance dans lequel le véhicule (10) est apte à être conduit à l'aide d'une commande à distance à la place de par un conducteur humain si la première partie de détermination (62) détermine que le véhicule (10) est dans la zone de conduite à distance ; dans lequel le véhicule comprend en outre une partie de détection de zone (50) destinée à détecter des informations de zone, en tant qu'informations de position, indiquant si le véhicule (10) est dans la zone de conduite libre, dans la zone de conduite alternative ou dans la zone de conduite à distance,
la première partie de détermination (62) est configurée pour déterminer si le véhicule (10) est dans la zone de conduite libre, dans la zone de conduite alternative ou dans la zone de conduite à distance sur la base d'un résultat de détection provenant de la partie de détection de zone (50) ;
**caractérisé en ce que** les informations de zone sont des informations à afficher ou à émettre par un élément fourni au préalable dans la zone de conduite libre, la zone de conduite alternative ou la zone de conduite à distance ;
dans lequel le véhicule (10) est une voiturette de golf qui est autorisée à être conduite jusqu'à un fairway près d'un green d'un parcours de golf ;
dans lequel le fairway inclut la zone de conduite libre ;
dans lequel, entre le green et le fairway, se trouve un tapis d'amortissement, dont un côté adjacent au fairway est la zone de conduite alternative, et un côté adjacent au green est la zone de conduite à distance.

2. Véhicule (10) selon la revendication 1, dans lequel, dans la zone de conduite alternative, le mode conduite alternative fournit une commande automatique sur la totalité d'une direction, d'un réglage de vitesse, d'une accélération, d'un ralentissement et d'un démarrage/arrêt du véhicule (10).

3. Véhicule (10) selon la revendication 1, dans lequel les informations de zone sont des informations à afficher par un élément fourni au préalable dans la zone de conduite libre, la zone de conduite alternative ou la zone de conduite à distance.

4. Véhicule (10) selon la revendication 1, comprenant en outre une partie d'entrée (12) destinée à entrer un signal du mode de conduite du véhicule (10),
dans lequel la partie de réglage de mode (62) est configurée pour régler le véhicule (10) sur le mode conduite libre même lorsque le véhicule (10) est dans la zone de conduite alternative si un signal du mode conduite libre est entré par la partie d'entrée (12).

5. Véhicule (10) selon la revendication 4, dans lequel la partie d'entrée (12) est apte à entrer un signal du mode conduite alternative en tant que signal du mode de conduite du véhicule (10),
le mode conduite alternative inclut un mode conduite partiellement alternative dans lequel la direction, le réglage de vitesse et l'accélération/ralentissement du véhicule (10) sont effectués de manière automatique, et
la partie de réglage de mode (62) est configurée pour régler le véhicule (10) sur le mode conduite partiellement alternative si le signal du mode conduite alternative est entré par la partie d'entrée (12) lorsque le véhicule (10) est dans la zone de conduite alternative.

6. Véhicule (10) selon la revendication 1, dans lequel le mode conduite alternative inclut un mode conduite entièrement alternative dans lequel la direction, le réglage de vitesse, l'accélération/ralentissement et le démarrage/arrêt du véhicule (10) sont effectués de manière automatique.

7. Véhicule (10) selon l'une des revendications 1 à 4, comprenant en outre une deuxième partie de détermination (20) destinée à déterminer si le véhicule (10) est apte ou non à effectuer une conduite alternative normalement,
dans lequel le dispositif de commande (20) est configuré pour annuler le mode conduite alternative si la deuxième partie de détermination (20) détermine que le véhicule (10) n'est pas apte à effectuer une conduite alternative normalement dans le mode conduite alternative.

8. Véhicule (10) selon l'une des revendications 1 à 7, comprenant en outre une troisième partie de détermination (20) destinée à déterminer si le véhicule (10) est apte ou non à effectuer une conduite à distance normalement,
dans lequel le dispositif de commande (20) est configuré pour annuler le mode conduite à distance si la troisième partie de détermination (20) détermine que le véhicule (10) n'est pas apte à effectuer une conduite à distance normalement dans le mode conduite à distance.

9. Véhicule (10) selon l'une des revendications 1 à 6, comprenant en outre une quatrième partie de détermination (20) destinée à déterminer si le véhicule (10) est apte ou non à être conduit normalement,
dans lequel le dispositif de commande (20) est configuré pour régler le véhicule (10) sur un mode conduite désactivée dans lequel le véhicule (10) est apte à être arrêté si la quatrième partie de détermination (20) détermine que le véhicule (10) n'est pas apte à être conduit normalement.

10. Véhicule (10) selon l'une des revendications 1 à 9, dans lequel la zone de conduite libre inclut une zone de trafic à deux voies, et
la zone de conduite alternative inclut une zone de trafic à une seule voie.

11. Véhicule (10) selon l'une des revendications 1 à 10, dans lequel la zone de conduite alternative inclut un chemin (P) prédéterminé sur lequel le véhicule (10) est apte à être conduit de manière automatique.

12. Terminal mobile pouvant communiquer avec un véhicule (10) apte à une conduite dans une zone de conduite libre où une conduite libre est autorisée et une zone de conduite alternative où une conduite alternative est autorisée, le terminal mobile comprenant :
une première partie de détermination (62) destinée à déterminer si le véhicule (10) est dans la zone de conduite libre ou dans la zone de conduite alternative sur la base d'informations de position concernant une position du véhicule (10) ; et
une partie de réglage de mode (62) destinée à régler le véhicule (10) sur un mode conduite libre où un conducteur humain est apte à conduire le véhicule (10) librement si la première partie de détermination (62) détermine que le véhicule (10) est dans la zone de conduite libre mais, d'autre part, régler le véhicule (10) sur un mode conduite alternative où le véhicule (10) est apte à être conduit de manière automatique à la place de par un conducteur humain si la première partie de détermination (62) détermine que le véhicule (10) est dans la zone de conduite alternative, dans lequel
la première partie de détermination (62) est apte à déterminer en outre si le véhicule (10) est ou non dans une zone de conduite à distance où la conduite à distance est autorisée, et
la partie de réglage de mode (62) est configurée pour régler le véhicule (10) sur un mode conduite à distance dans lequel le véhicule (10) est apte à être conduit à l'aide d'une commande à distance à la place de par un conducteur humain si la première partie de détermination (62) détermine que le véhicule (10) est dans la zone de conduite à distance ; dans lequel
le terminal mobile comprend en outre une partie de détection de zone (50) destinée à détecter des informations de zone, en tant qu'informations de position, indiquant si le véhicule (10) est dans la zone de conduite libre, dans la zone de conduite alternative ou dans la zone de conduite à distance,
la première partie de détermination (62) est configurée pour déterminer si le véhicule (10) est dans la zone de conduite libre, dans la zone de conduite alternative ou dans la zone de conduite à distance sur la base d'un résultat de détection provenant de la partie de détection de zone (50) ;
**caractérisé en ce que** les informations de zone sont des informations à afficher ou à émettre par un élément fourni au préalable dans la zone de conduite libre, la zone de conduite alternative ou la zone de conduite à distance ;
dans lequel le véhicule (10) est une voiturette de golf qui est autorisée à être conduite jusqu'à un fairway près d'un green d'un parcours de golf ;
dans lequel le fairway inclut la zone de conduite libre ;
dans lequel, entre le green et le fairway, se trouve un tapis d'amortissement, dont un côté adjacent au fairway est la zone de conduite alternative, et un côté adjacent au green est la zone de conduite à distance.
